# EUROPÄISCHE PATENTANMELDUNG

(11) **EP 1 975 135 A2**
(43) Veröffentlichungstag der Anmeldung: **01.10.2008**
(21) Anmeldenummer: 08102913.4
(22) Anmeldetag: 26.03.2008
(51) Int. Cl.: C04B 7/153, C04B 7/21

(54) **Hydraulisches Bindemittel**

(30) Priorität: 30.03.2007 AT 5102007
(71) Anmelder: Novak, Denes, Dipl-Ing., 2753 Markt Piesting (AT); Novak, Edith, 2753 Markt Piesting (AT)
(72) Erfinder: Novak, Denes, Dipl-Ing., 2753 Markt Piesting (AT); Novak, Edith, 2753 Markt Piesting (AT)
(74) Vertreter: Müllner, Martin

(57) **Zusammenfassung**

Um bei einem hydraulischen Bindemittel aus über 5000 cm²/g fein vermahlener, latent hydraulischer Hochofenschlacke der Zusammensetzung
Al₂O₃ 5-10 Masse-%
SiO₂ 32-42 Masse-%
CaO 30-44 Masse-%
CaO+MgO+SiO₂ > 75 Masse-%
Glasigkeit > 75 %,
die Sulfatanreger und aktivierende Zusätze enthält, hohe Festigkeitswerte trotz geringer Werte von Al₂O₃ zu erreichen, werden erfindungsgemäß dem Bindemittel zusätzlich Aluminium- und Kalziumverbindungen zugesetzt, wobei die Aluminiumverbindungen zumindest 0,1 Masse-% Aluminiumoxid äquivalent und die Kalziumverbindungen zumindest 0,2 Masse-% Kalziumoxid äquivalent sind.

## Beschreibung

### Technisches Gebiet

Die vorliegende Erfindung bezieht sich auf ein hydraulisches Bindemittel aus über 5000 Blaine fein vermahlener, latent hydraulischer Hochofenschlacke der Zusammensetzung
Al₂O₃ 5-10 Masse-%
SiO₂ 32-42 Masse-%
CaO 30-44 Masse-%
CaO+MgO+SiO₂ > 75 Masse-%
Glasigkeit > 75 %,
die Sulfatanreger und aktivierende Zusätze enthält.

Solche Hochofenschlacken sind besonders mäßig latent hydraulisch und werden im deutschsprachigen Raum auch Hüttensande genannt. Ihr Al₂O₃ -Gehalt ist relativ gering, er liegt über 5 Masse-% und meist unter 10 Masse-%. Durch sulfatische Anregung sowie durch Einsatz anderer aktivierender Zusätze können sie für die Herstellung von hydraulischen Bindemitteln herangezogen werden.

### Stand der Technik

In der AT 408983 Bwurde bereits die Entstehung, die mögliche Aktivierung der latent hydraulischen Eigenschaften und die Beurteilung der Reaktivität der Hochofenschlacken ausführlich erörtert. Weiterhin ist in dieser Schrift ein hydraulisches Bindemittel beschrieben, welches auch mäßig latent hydraulische Hochofenschlacke mit sulfatischer Aktivierung enthält. Diese mäßig latent hydraulische Hochofenschlacke aus der AT 408983 Bweist folgende Zusammensetzung auf:
SiO₂ 34-40 Masse-%
CaO 34-37 Masse-%
Al₂O₃ >9 Masse-%

Die Aktivierung der Hochofenschlacke erfolgt durch Zumischung oder Zumahlung von natürlichem Gips, Rauchgasentschwefelung (REA-Gips) oder Anhydrit von 12-20 Masse-%, Portlandzement oder Portlandzementklinker von 0,5-5 Masse-% und/oder anderen CaO-Trägern wie Heißmehl, Branntkalk oder Ca(OH)₂ von 0,5-3 Masse-%, Alkalisulfaten oder -carbonaten von 0-3 Masse-% und/oder Ca-Salzen von Carboxylsäuren von 0,5-3 Masse-%.

### Darstellung der Erfindung

Es ist Aufgabe der vorliegenden Erfindung, ein Bindemittel der eingangs genannten Art zu schaffen, bei dem noch weniger reaktive Hochofenschlacke mit einem Aluminiumoxid-Gehalt von mindestens 5 Masse-% und höchstens 10 Masse-% zum Einsatz kommt und dennoch ein hochwertiges Produkt entsteht.

Diese Aufgabe wird durch ein Bindemittel der eingangs genannten Art erfindungsgemäß dadurch gelöst, dass dem Bindemittel zusätzlich Aluminium- und Kalziumverbindungen zugesetzt sind, wobei die Aluminiumverbindungen zumindest 0,1 Masse-% Aluminiumoxid äquivalent sind und die Kalziumverbindungen zumindest 0,2 Masse-% Kalziumoxid äquivalent sind. Es ist dabei günstig, wenn das Verhältnis der Aluminiumverbindungen zu den Kalziumverbindungen - gerechnet als Aluminiumoxidäquivalent bzw. Kalziumoxidäquivalent - 1:1 bis 1:5, vorzugsweise 1:2 bis 1:4 beträgt.

Zu Beginn der Erhärtung und Festigkeitsbildung des hydraulischen Bindemittels sind die wichtigsten Hydratphasen Kalziumaluminathydratphasen. Hochofenschlacken mit einem geringen Al₂ O₃-Gehalt (z.B. unter 9 Masse-%) enthalten für die Bildung von Kalziumaluminathydratphasen zu wenig Aluminiumoxid. Diese Hochofenschlacken eignen sich dennoch für sulfatische Aktivierung gemäß dieser Erfindung, wenn der Aluminiumoxidgehalt durch Zugabe von Aluminiumverbindungen und/oder Aluminiumsalzen wie z.B. Aluminiumoxid, Aluminiumhydroxid, Tonerdezement, Aluminiumsulfat, Natrium- oder Kaliumaluminiumsulfat, Aluminiumazetat u.s.w. erhöht wird. Für die Bildung von Kalziumaluminathydratphasen ist ein weiteres wichtiges Kriterium das Vorhandensein von Kalziumoxid bzw. Kalziumoxidverbindungen. Für die gewünschte Bildung von Kalziumaluminathydratphasen ist es notwendig, dass auch Kalziumverbindungen, wie z.B. Branntkalk, Kalziumhydroxid, Portlandzementklinker oder Portlandzement und/oder Ca-Salze der Carboxylsäuren zugesetzt werden.

Oft genügen dabei relativ geringe Mengen an Aluminium- und Kalziumverbindungen. Offensichtlich wird durch die Bildung von Kalziumaluminathydratphasen der weitere Hydratationsprozess der Schlacke aktiviert.

Vorzugsweise erfolgt die Aktivierung der oben genannten Hochofenschlacken durch Zumischung oder Zumahlung von natürlichem Gips, Rauchgasentschwefelungsgips (REA-Gips) oder Anhydrit von 8-18 Masse-%, Aluminiumverbindungen wie Aluminiumoxid, Aluminiumhydroxid, Tonerdezement, Aluminiumsulfat, Natrium- oder Kaliumaluminiumsulfat oder Aluminiumazetat von 0,1-3 Masse-% Aluminiumoxidäquivalent, Portlandzementklinker oder Portlandzement und/oder anderen CaO-Trägern wie Branntkalk, Heißmehl oder Ca(OH)₂ von 0,2-5 Masse-% Kalziumoxidäquivalent, Alkalisulfaten oder -carbonaten und/oder Ca-Salzen der Carboxylsäuren von 0,1-3 Masse-%. Das in diesem Patent beschriebene Bindemittel soll vorzugsweise über 5000 cm²/g Feinheit (Blaine) aufweisen, die durch gemeinsames Vermahlen der vermischten Komponenten, die bereits fein vermahlen vorliegen, erreicht wird.

### Weg(e) zur Ausführung der Erfindung

Anhand einiger Beispiele wird die vorliegende Erfindung erläutert. Es werden Bindemittel mit folgenden Bestandteilen hergestellt:

**Tabelle 1**

| **Bestandteile in Masse-%** | **Bestandteile in Masse-%** |
|---|---|
| Rezeptur lt. AT 408983 B | Erfindungsgemäße Rezeptur |
| | |
| 85,0 Masse-% Hochofenschlacken | 83,2 Masse-% Hochofenschlacken |
| 13,2 Masse-% Gips | 13,0 Masse-% Gips |
| 1,3 Masse-% Heißmehl | 1,3 Masse-% Heißmehl |
| 0,5 Masse-% Kalziumacetat | 0,5 Masse-% Kalziumacetat |
| | 0,5 Masse-% Aluminiumoxid |
| | äquivalente Aluminiumverbindungen |
| | 1,5 Masse-% Kalziumoxid äquivalente Kalziumverbindungen |

Erfindungsgemäß werden im Vergleich zu der AT 408983 B bei zu niedrigen Aluminiumoxidgehalten der Hochofenschlacken folgende Druckfestigkeiten erreicht:

**Beispiel 1**

**Zusammensetzung der Schlacke:**
Al₂O₃ 6,46 Masse-%
SiO₂ 40,95 Masse-%
Fe₂O₃ 0,44 Masse-%
CaO 38,73 Masse-%
MgO 9,02 Masse-%
K₂O 0,58 Masse-%
TiO₂ 0,64 Masse-%
MnO 0,83 Masse-%

Druckfestigkeiten N/mm² nach EN 196-1:

**Tabelle 2**

| nach Tagen | Rezeptur It. AT 408983 B | Erfindungsgemäße Rezeptur |
|---|---|---|
| | | |
| 1 | 1,3 | 7,3 |
| 2 | 12,2 | 15,3 |
| 7 | 25,4 | 28,9 |
| 28 | 32,2 | 42,2 |

**Beispiel 2**

**Zusammensetzung der Schlacke:**
Al₂O₃ 6,57 Masse-%
SiO₂ 35,88 Masse-%
Fe₂O₃ 0,54 Masse-%
CaO 42,1 Masse-%
MgO 9,48 Masse-%
K₂O 0,29 Masse-%
TiO₂ 0,24 Masse-%
MnO 0,26 Masse-%

**Druckfestigkeiten N/mm²** nach EN 196-1:

**Tabelle 3**

| nach Tagen | Rezeptur It. AT 408983 B | Erfindungsgemäße Rezeptur |
|---|---|---|
| | | |
| 1 | 2,3 | 12,3 |
| 2 | 10,0 | 19,9 |
| 7 | 17,2 | 32,1 |
| 28 | 21,9 | 39,6 |

**Beispiel 3**

**Zusammensetzung der Schlacke:**
Al₂O₃ 6,91 Masse-%
SiO₂ 34,95 Masse-%
Fe₂O₃ 1,51 Masse-%
CaO 31,32 Masse-%
MgO 14,29 Masse-%
K₂O 1,34 Masse-%
TiO₂ 0,4 Masse-%
MnO 3,8 Masse-%

**Druckfestigkeiten N/mm²** nach EN 196-1:

**Tabelle 4**

| nach Tagen | Rezeptur lt. AT 408983 B | Erfindungsgemäße Rezeptur |
|---|---|---|
| | | |
| 1 | 1,7 | 8,0 |
| 2 | 3,5 | 16,9 |
| 7 | 15,5 | 34,6 |
| 28 | 28,5 | 49,9 |

**Beispiel 4**

**Zusammensetzung der Schlacke:**
Al₂O₃ 7,0 Masse-%
SiO₂ 37,56 Masse-%
Fe₂O₃ 0,85 Masse-%
CaO 43,73 Masse-%
MgO 7,16 Masse-%
K₂O 0,5 Masse-%
TiO₂ 0,3 Masse-%
MnO 0,27 Masse-%

**Druckfestigkeiten N/mm²** nach EN 196-1:

**Tabelle 5**

| nach Tagen | Rezeptur It. AT 408983 B | Erfindungsgemäße Rezeptur |
|---|---|---|
| | | |
| 1 | 4,8 | 6,2 |
| 2 | 12,2 | 13,8 |
| 7 | 14,4 | 31,8 |
| 28 | 19,1 | 51,6 |

**Beispiel 5**

**Zusammensetzung der Schlacke:**
Al₂O₃ 8,9 Masse-%
SiO₂ 36,18 Masse-%
Fe₂O₃ 0,47 Masse-%
CaO 36,67 Masse-%
MgO 13,58 Masse-%
K₂O 0,39 Masse-%
TiO₂ 1,12 Masse-%
MnO 0,56 Masse-%

**Druckfestigkeiten N/mm²** nach EN 196-1:

**Tabelle 6**

| nach Tagen | Rezeptur It. AT 408983 B | Erfindungsgemäße Rezeptur |
|---|---|---|
| | | |
| 1 | 4,8 | 10,5 |
| 2 | 11,2 | 20,5 |
| 7 | 24,7 | 37,9 |
| 28 | 29,3 | 47,5 |

Das erfindungsgemäße Bindemittel zeichnet sich durch sehr niedrige Hydratationswärme, Sulfatbeständigkeit und hohe Säurebeständigkeit aus. Es ist für die Herstellung von Kläranlagen, Biogasanlagen, Kanalrohren, Massenbeton, Auffangwannen und Bauprojekten, die dem Sulfatangriff und Säureangriff ausgesetzt sind, hervorragend geeignet.

## Patentansprüche

1. Hydraulisches Bindemittel aus über 5000 Blaine fein vermahlener, latent hydraulischer Hochofenschlacke der Zusammensetzung
Al₂O₃ 5-10 Masse-%
SiO₂ 32-42 Masse-%
CaO 30-44 Masse-%
CaO+MgO+SiO₂ > 75 Masse-%
Glasigkeit > 75 %,
die Sulfatanreger und aktivierende Zusätze enthält, **dadurch gekennzeichnet, dass** dem Bindemittel zusätzlich Aluminium- und Kalziumverbindungen zugesetzt sind, wobei die Aluminiumverbindungen zumindest 0,1 Masse-% Aluminiumoxid äquivalent sind und die Kalziumverbindungen zumindest 0,2 Masse-% Kalziumoxid äquivalent sind.

2. Bindemittel nach Anspruch 1, **dadurch gekennzeichnet, dass** das Verhältnis der Aluminiumverbindungen zu den Kalziumverbindungen - gerechnet als Aluminiumoxidäquivalent bzw. Kalziumoxidäquivalent - 1:1 bis 1:5, vorzugsweise 1:2 bis 1:4 beträgt.

3. Bindemittel nach Anspruch 1 oder 2, **dadurch gekennzeichnet, dass** die Hochofenschlacke eine Feinheit von 5000-6500 cm²/g aufweist.

4. Bindemittel nach einem der Ansprüche 1 bis 3, **dadurch gekennzeichnet, dass** es als Sulfatträger 8-18% Abfallgips der Rauchgasentschwefelung oder Halbhydrat oder Anhydrit oder Naturgips oder Gemische dieser Sulfatträger enthält.

5. Bindemittel nach einem der Ansprüche 1 bis 4, **dadurch gekennzeichnet, dass** es Aluminiumoxid und/oder andere Aluminiumverbindungen, wie Tonerdezement, Aluminiumhydroxid, Aluminiumsulfat, Natrium- oder Kaliumaluminiumsulfat, Aluminiumazetat, in einer Menge von 0,1 - 3 Masse-% Aluminiumoxidäquivalent enthält.

6. Bindemittel nach einem der Ansprüche 1 bis 5, **dadurch gekennzeichnet, dass** es Kalziumverbindungen wie Branntkalk und/oder Heißmehl, Kalziumhydroxid, Portlandzementklinker, Portlandzement oder deren Gemische in einer Menge von 0,2 - 5 Masse-% Kalziumoxidäquivalent enthält.

7. Bindemittel nach einem der Ansprüche 1 bis 6, **dadurch gekennzeichnet, dass** es 0,1 - 3 Masse-% Alkalisulfate und/oder -carbonate und/oder Kalziumsalze von Carboxylsäuren enthält.
